# EUROPEAN PATENT SPECIFICATION

(11) **EP 3 032 020 B1**
(45) Date of publication and mention of the grant of the patent: **07.11.2018**
(21) Application number: 14197323.0
(22) Date of filing: 11.12.2014
(51) Int. Cl.: E05F 15/622, F16D 7/02

(54) **Actuator device for automatically activating the vehicle door of a motor vehicle**
Aktuatorvorrichtung zum automatischen Betätigen der Fahrzeugtür eines Kraftfahrzeugs
Dispositif d'actionneur pour l'activation automatique de la porte d'un véhicule motorisé

(43) Date of publication of application: 15.06.2016
(73) Proprietor: U-Shin Deutschland Zugangssysteme GmbH, 85253 Erdweg (DE)
(72) Inventor: Bittner, Eric, 85253 Erdweg (DE); Winter, Andreas, 85253 Erdweg (DE)
(74) Representative: Gaillarde, Frédéric F. Ch.

(56) References cited:
- EP-A1- 2 159 438
- WO-A1-97/48915
- DE-A1-102008 031 228
- US-A1- 2011 290 050
- US-A1- 2014 166 423

## Description

The invention relates to an actuator device for automatically activating the vehicle door of a motor vehicle which comprises an arrangement of tubular housing parts which can be extended and retracted telescopically.

For the telescopic retraction or extension, the actuator device contains for example a spindle drive and an electromotive drive which acts on the spindle drive. In this context, a vehicle door is understood in the following to be, inter alia, both the side doors and the tailgate or the boot lid of a vehicle.

A known actuator device of the generic type comprises a tube arrangement which can be extended and retracted telescopically and which is driven by means of a spindle drive located in the tube arrangement. In this context, the spindle drive is connected to an electromotive drive which causes a spindle extending in the axial direction to rotate, said spindle then pushing a spindle nut, located in a guide along the longitudinal axis of the spindle, from a pulled-back position of rest into an extended position.

A drawback of the known actuator devices is the risk of being damaged when a high value torque is applied between the spindle drive and the electromotive drive, especially when the high torque is due to a manual misuse of an user.

An existing solution consists in having an electromagnetic clutch. Such solution is very expensive.

A further existing solution consists in having a torque limiting device with a tolerance ring, as disclosed in document DE102008031228 A1. Such solution usually requires too small tolerances in the press fit of the tolerance ring outer and inner sleeve. Also the range of limited torque is too wide.

One object of the present invention is to provide an actuator device without the above mentioned drawbacks and specifically a device having a simple, reliable, cheap and efficient clutch.

This object is achieved according to the invention by an actuator device for automatically activating the vehicle door of a motor vehicle, in particular the tailgate, according to claim 1.

The assembly comprising the drive pin, the outer sleeve and the dowel pin of the invention ensures a reliable, very simple, efficient and cheap clutch.

Having the drive pin press fitted in the outer sleeve via a dowel pin assures that if a certain torque is exceeded, the dowel pin slips inside the sleeve and thereby provides an overload protection.

According to further embodiments which can be considered alone or in combination as defined in the appended claims :
- the excrescences continuously extend along a direction substantially parallel to the axis of rotation of the drive pin from the end of the drive pin fitted in the outer sleeve; and/or
- the dowel pin comprises an axial slot arranged to receive the excrescence; and/or
- the dowel pin in made of an elastic material, such as a spring steel; and/or
- the electromotive drive further comprises a gearbox driven by the motor and arranged to drive in rotation the outer sleeve; and/or
- the actuator further comprises a brake device located between the electrical motor and the gearbox; and/or
- the drive pin is form-fitted to the dowel pin and the dowel pin is press fitted in the outer sleeve.

Further details and advantages of the invention emerge from the following exemplary embodiments explained with reference to figures, in which:
- Figure 1 is a schematic perspective view of the rear region of a motor vehicle with the tailgate opened and laterally arranged actuator device according to the invention;
- Figure 2 shows a longitudinal section through the actuator device according to the invention having a spindle drive comprising a spindle nut and a tubular guide part;
- Figure 3 shows partially the actuator device of the invention in an explosion view;
- Figure 4 shows more in detail part of the actuator device according to a first embodiment of the invention; and
- Figure 5 shows more in detail part of the actuator device according to a second embodiment of the invention.

In all figures, the same reference numbers designate the same elements.

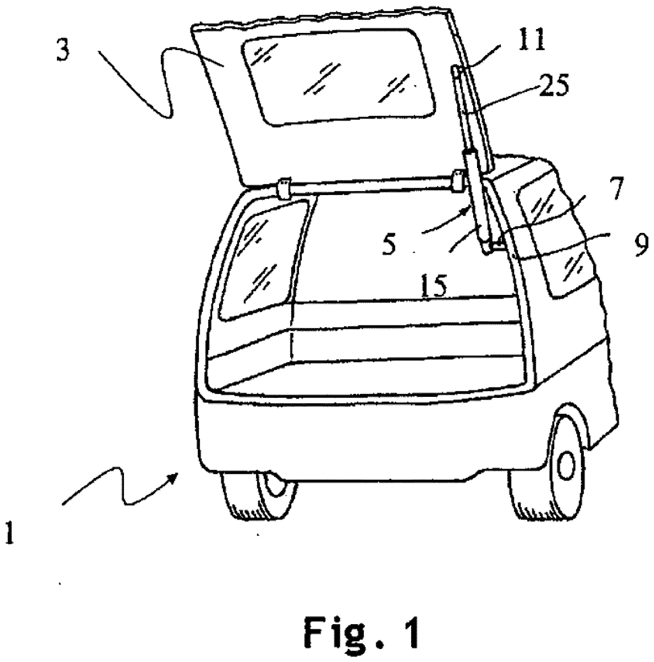

Figure 1 indicates by 1 a motor vehicle which has a tailgate 3 which can be pivoted by an actuator device 5 according to the invention from a closed position into the opened position represented in Figure 1 and, if appropriate, into the closed position again. The tailgate 3 may also be pivoted by two actuator devices 5 arranged by instance on opposite sides of the tailgate 3.

The actuator device 5 according to the invention may also be designed for actuating a side door of a motor vehicle. It is also conceivable to arrange the actuator device in the hinge-shaft region of the tailgate or for actuation of a sliding roof. Moreover, automatic seat adjustment is also possible by means of the actuator device according to the invention.

In the illustrated embodiment, the actuator device 5 is connected via a first connecting device 7 to the body 9 of the motor vehicle 1 and via a second connecting device 11 to the tailgate 3. The connected devices 7, 11 may be angle joints. The connecting devices 7, 11 comprise respectively a first and a second ball socket 13 in which a ball-ended pin (not illustrated) fixed either to the body 9 of the vehicle or to the tailgate 3 is mounted.

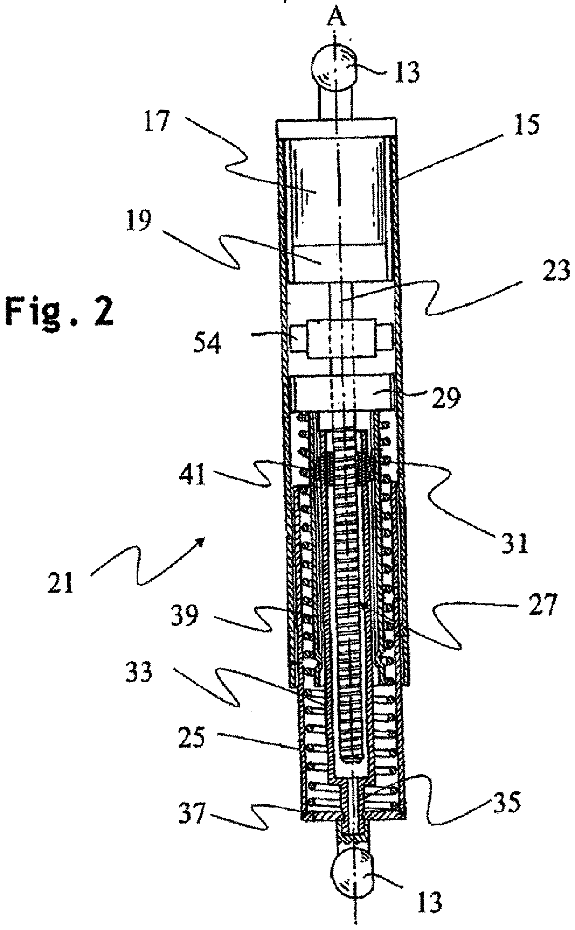

As can be gathered from Figures 1 and 2, the actuator device 5 comprises a first tubular housing 15 connected to the body 9, in which is located an electric-motor drive comprising an electric motor 17 and a non-self-locking transmission gear unit 19 connected axially downstream.

A spindle drive 21 is connected to the output shaft 23 of the electric-motor drive and acts on a second tubular housing 25 connected to the tailgate 3, which can be pushed out of the first tubular housing 15 and into the latter telescopically.

The spindle drive 21 comprises a spindle 27 being guided laterally on its side facing the transmission gear unit 19 in a spindle bearing 29 connected to the first housing 15, and a spindle nut 31 having an internal thread (not illustrated) engaging with the spindle 27.

The spindle drive 21 also comprises a tubular push rod 33 for bearing the spindle nut 31 and which extends in the direction of the longitudinal axis A of the spindle 27, the push rod 33 projecting beyond the front of the spindle 27. In this case, the front end 35 of the push rod 33 is designed as a coupling part to which both a disc-shaped stop 37 and the second ball socket 13 are fastened.

According to one embodiment of the invention the spindle nut 31 and the push rod 33 are of one-piece design.

Further, a tubular guide part 39 with a guide contour is provided for guiding the spindle nut 31, this guide part 39 enclosing the spindle nut 31 and the push rod 33, and being fastened to the spindle bearing 29.

The spindle nut 31 can be guided by the guide part 39 by providing the spindle nut 31 with a plurality of guide lugs 41 engaging internally in corresponding slots (not illustrated) in the lateral wall of the guide part 39. These guide lugs 41 are for example distributed uniformly over the outer circumference of the spindle nut 31 and have an arrangement in the form of a toothed wheel.

Moreover, a form-closure between the guide part 39 and the spindle nut 31 secures the spindle nut 31 against rotation relative to the guide part 39. In other words, the guide part 39 is provided with a shape complementary to the shape of the spindle nut 31.

Consequently taking reference to Figure 2, when the spindle 27 is rotated by the electric motor 17, the spindle nut 31 and thus the push rod 33 is displaced along the longitudinal axis A of the spindle 27 along the guide contour of the guide part 39. The second tubular housing 25 being coupled to the push rod 33 is likewise displaced therewith and the tailgate 3 is actuated.

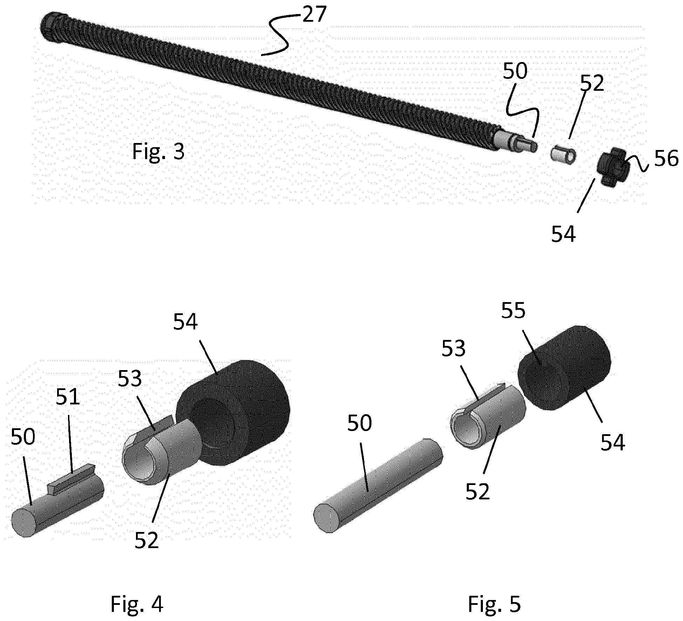

As illustrated on figure 3, the actuator device comprises an outer sleeve 54 comprising a hallow 56 and arranged to be driven in rotation by the electromotive drive. Typically, the outer sleeve 54 is connected to the output shaft 23.

The outer sleeve may be made of an elastomeric material, such as rubber which facilitates the axial tolerance or of an elastic material, such as a spring steel.

The spindle 27 further comprises at one end a drive pin 50. Typically, the said end is the closest to the electric motor.

According to the invention, the drive pin 50 is press fitted in the hallow 56 of the outer sleeve 54 via a dowel pin 52 so that the spindle drive is rotated upon rotation of the outer sleeve.

Thus, when the outer sleeve is driven in rotation by the electromotive drive, the rotation movement is transferred to the drive pin via the dowel pin.

The dowel pin acts as a friction device to apply a certain amount of torque between the drive pin and the outer sleeve which transmits the rotation.

Thanks to the invention, the actuator device comprises a reliable, very simple, efficient and cheap clutch avoiding damages due to high torque.

Typically, the outer surface of the dowel pin and the inner surface of the outer sleeve are configured so as to define a threshold torque to be applied between the outer sleeve and the spindle drive. Typically, the threshold torque value is inferior to 5Nm and superior to 3Nm, specifically between 2.5Nm and 4.5Nm . Beyond the threshold torque, the outer surface of the dowel pin slips on the inner surface of the outer sleeve acting as a clutch between the spindle 27 and the electromotive drive.

Typically, the dowel pin is of cylindrical shape which extends according to the rotation axis of the drive pin, dowel pin and outer sleeve.

The outer sleeve may comprise a center surrounded by at least two annular projections which cooperate with the means which drive the said outer sleeve in rotation. The said center has then a shape complementary to the outer surface of the dowel pin. Typically the center has a sensibly cylindrical shape such as the dowel pin.

The dowel pin is advantageously made of an elastomeric material so as to provide a good and reversible clutching effect. For example the dowel pin is made of rubber.

The drive pin is form-fitted to the dowel pin and the dowel pin is press fitted in the outer sleeve. Specifically, the said dowel pin has an inner surface of a shape sensibly complementary to the outer surface of the drive pin. The outer sleeve has an inner surface of a shape sensibly complementary to the outer surface of the dowel pin.

According to an embodiment which does not form part of the invention, illustrated on figure 4, the drive pin comprises an excrescence 51 in a direction substantially perpendicular to the common axis of rotation of the spindle drive, the dowel pin and the outer sleeve and wherein the excrescence interacts with the dowel pin 52 so as to transfer the rotation movement of the outer sleeve to the spindle drive via the dowel pin.

The excrescence continuously extends along a direction substantially parallel to the axis of rotation of the drive pin from the end of the drive pin fitted in the outer sleeve.

As illustrated, the dowel pin comprises an axial slot 53 arranged to receive the excrescence.

Such configuration enables by a simple manner a reliable transmission of movement between the drive pin and the dowel pin via the length of the drive pin.

Typically, the drive pin is form-fitted to the dowel pin and the dowel pin is press fitted in the outer sleeve. Specifically, the said dowel pin has an inner surface of a shape sensibly complementary to the outer surface of the drive pin. The outer sleeve has an inner surface of a shape sensibly complementary to the outer surface of the dowel pin. According to such configuration the torque is transferred via friction force between the outer sleeve and the dowel pin.

According to the invention the drive pin comprises a plurality of excrescence in a plurality of directions substantially perpendicular to the common axis of rotation of the spindle drive, the dowel pin and the outer sleeve.

In this configuration, the dowel pin may have one or several slots for cooperating with one or some or all of the said excrescences.

According to an embodiment which does not form part of the invention, illustrated on figure 5, the hollow of the outer sleeve 54 comprises an excrescence 55 in a direction substantially perpendicular to the common axis of rotation of the spindle drive, the dowel pin and the outer sleeve and wherein the excrescence interacts with the dowel pin 52 so as to transfer the rotation movement of the outer sleeve to the spindle drive via the dowel pin.

The excrescence continuously extends along a direction substantially parallel to the axis of rotation of the outer sleeve 54 from the end of the outer sleeve in which the drive pin is fitted in the outer sleeve.

As illustrated, the dowel pin comprises an axial slot 53 arranged to receive the excrescence.

Such configuration enables by a simple manner a reliable transmission of movement between the drive pin and the dowel pin via the length of the drive pin.

Typically, the dowel pin 52 is press fitted on the drive pin and the outer sleeve is form-fitted to the dowel pin 50. Specifically, said dowel pin has an inner surface of a shape sensibly complementary to the outer surface of the drive pin. The outer sleeve has an inner surface of a shape sensibly complementary to the outer surface of the dowel pin. According to such configuration the torque is transferred via friction force between the dowel pin and the drive pin.

According to the invention the hollow of the outer sleeve comprises a plurality of excrescence in a plurality of directions substantially perpendicular to the common axis of rotation of the spindle drive, the dowel pin and the outer sleeve.

In this configuration, the dowel pin may have one or several slots for cooperating with one or some or all of the said excrescences.

The actuator of the invention may further comprise a brake device coupled to the output shaft of the electrical motor.

The brake device is typically coupled to a gearbox that has an output to drive the outer sleeve and thus the spindle for extending and retracting telescopically the tubular housing parts and thus to open or close the door or tailgate.

More in detail, the brake device 18 is hysteresis brake as described for example in EP1 940 012.

However, other brake devices might be integrated into the actuator device.

Typically, the brake device comprises essentially a carrier part which is composed, for example, of plastic and which is connected in a rotationally fixed fashion to the housing of the electric motor and in which an annular hysteresis element is attached. A disk of four magnetic alternating poles of permanent magnets, arranged distributed uniformly within the hysteresis element, is provided at a predefined radial distance from the hysteresis element.

The disk is supported in its center by a double shaft coupling nut 30 having a general form of an H in sectional view.

The invention has been described above with the aid of embodiments without limitation of the general inventive concept as defined in the claims.

Many modifications and variations will suggest themselves to those skilled in the art upon making reference to the foregoing illustrative embodiments, which are given by way of example only and which are not intended to limit the scope of the invention, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. Actuator device for automatically activating the vehicle door (3) of a motor vehicle (1), in particular the tailgate (3), which comprises :
- an electromotive drive comprising an electrical motor (17),
- a spindle drive (21) comprising a spindle (27) having at one end a drive pin (50),
- an outer sleeve (54) comprising an hollow and arranged to be driven in rotation by the electromotive drive or by the spindle drive,
- an arrangement of tubular housing parts (15, 25) that can be extended and retracted telescopically upon rotation of the spindle,
wherein the drive pin is press fitted in the hollow of the outer sleeve via a dowel pin (52) so that the spindle is rotated upon rotation of the outer sleeve
wherein one element selected from the drive pin (50) and the hollow of the outer sleeve (54) comprises a plurality of excrescences (51, 55) in a plurality of directions substantially perpendicular to the common axis of rotation of the spindle (27), dowel pin (52) and outer sleeve (54) and wherein the plurality of excrescences (51, 55) interacts with the dowel pin (52) so as to transfer the rotation movement of the outer sleeve (54) to the spindle (27) via the dowel pin (52), and wherein the outer surface of the dowel pin (52) and the inner surface of the outer sleeve (54), respectively the inner surface of the dowel pin (52) and the outer surface of the drive pin (50), are configured so as to define a threshold torque to be applied between the outer sleeve and the spindle, beyond the threshold torque the outer surface of the dowel pin slips on the inner surface of the outer sleeve, respectively the inner surface of the dowel pin (52) slips on the outer surface of the drive pin (50).

2. The actuator device according to claim 1, wherein the drive pin (50) comprises the plurality of excrescences (51).

3. The actuator device according to claim 2, wherein the plurality of excrescences (51) continuously extends along a direction substantially parallel to the axis of rotation of the drive pin (50) from the end of the drive pin (50) fitted in the outer sleeve (54).

4. The actuator device according to claim 1, wherein the hollow of the outer sleeve (54) comprises the plurality of excrescences (55).

5. The actuator device according to claim 4, wherein the plurality of excrescences (55) continuously extends along a direction substantially parallel to the axis of rotation of the outer sleeve (54) from the end of the outer sleeve (54) in which the drive pin (50) is fitted in the outer sleeve (54).

6. The actuator device according to any of claims 1 to 5, wherein the dowel pin (52) comprises at least an axial slot arranged to receive the plurality of excrescences.

7. The actuator device according to any of the preceding claims, wherein the dowel pin (52) in made of an elastic material, such as a spring steel.

8. The actuator device according to any of the preceding claims, wherein the electromotive drive further comprises a gearbox driven by the motor and arranged to drive in rotation the outer sleeve (54).

9. The actuator device according to claim 8, further comprising a brake device located between the electrical motor (17) and the gearbox.

10. The actuator device according to any of the preceding claims, wherein the drive pin (50) is form-fitted to the dowel pin (52) and the dowel pin (52) is press fitted in the outer sleeve (54).

## Patentansprüche

1. Betätigungsvorrichtung zur automatischen Aktivierung der Fahrzeugtür (3) eines Motorfahrzeugs (1), im Speziellen der Heckklappe (3), umfassend:
- einen elektromotorischen Antrieb, einen Elektromotor (17) umfassend,
- einen Spindelantrieb (21), eine Spindel (27) umfassend, die an einem Ende einen Antriebsstift (50) aufweist,
- eine Außenhülse (54), einen Hohlraum umfassend, und angeordnet, um durch den elektromotorischen Antrieb oder durch den Spindelantrieb in Drehung versetzt zu werden,
- eine Anordnung von röhrenförmigen Gehäuseteilen (15, 25), die beim Drehen der Spindel teleskopisch aus- und eingefahren werden kann,
wobei der Antriebsstift über einen Passstift (52) in den Hohlraum der Außenhülse eingepresst ist, sodass die Spindel bei der Drehung der Außenhülse gedreht wird,
wobei ein Element, das aus dem Antriebsstift (50) und dem Hohlraum der Außenhülse (54) ausgewählt wird, eine Vielzahl von Vorsprüngen (51, 55) in eine Vielzahl von Richtungen im Wesentlichen senkrecht zur gemeinsamen Drehachse der Spindel (27), des Passstifts (52) und der Außenhülse (54) umfasst, und wobei die Vielzahl von Vorsprüngen (51, 55) mit dem Passstift (52) interagiert, um die Drehbewegung der Außenhülse (54) über den Passstift (52) auf die Spindel (27) zu übertragen, und wobei die Außenfläche des Passstifts (52) und die Innenfläche der Außenhülse (54), beziehungsweise die Innenfläche des Passstifts (52) und die Außenfläche des Antriebsstifts (50) konfiguriert sind, um ein Grenzmoment zu definieren, das zwischen der Außenhülse und der Spindel anzulegen ist, wobei jenseits des Grenzmoments die Außenfläche des Passstifts an der Innenfläche der Außenhülse rutscht, beziehungsweise die Innenfläche des Passstifts an der Außenfläche des Antriebsstifts rutscht.

2. Betätigungsvorrichtung nach Anspruch 1, wobei der Antriebsstift (50) die Vielzahl von Vorsprüngen (51) umfasst.

3. Betätigungsvorrichtung nach Anspruch 2, wobei sich die Vielzahl von Vorsprüngen (51) durchgehend entlang einer Richtung im Wesentlichen parallel zur Drehachse des Antriebsstifts (50) aus dem Ende des Antriebsstifts (50) erstreckt, der in die Außenhülse (54) eingebaut ist.

4. Betätigungsvorrichtung nach Anspruch 1, wobei der Hohlraum der Außenhülse (54) die Vielzahl von Vorsprüngen (55) umfasst.

5. Betätigungsvorrichtung nach Anspruch 4, wobei sich die Vielzahl von Vorsprüngen (55) durchgehend entlang einer Richtung im Wesentlichen parallel zur Drehachse der Außenhülse (54) aus dem Ende der Außenhülse (54) erstreckt, in dem der Antriebsstift (50) in der Außenhülse (54) eingebaut ist.

6. Betätigungsvorrichtung nach einem der Ansprüche 1 bis 5, wobei der Passstift (52) zumindest einen axialen Schlitz umfasst, der angeordnet ist, um die Vielzahl von Vorsprüngen aufzunehmen.

7. Betätigungsvorrichtung nach einem der vorstehenden Ansprüche, wobei der Passstift (52) aus einem elastischen Material, wie Federstahl gefertigt ist.

8. Betätigungsvorrichtung nach einem der vorstehenden Ansprüche, wobei der elektromotorische Antrieb darüber hinaus ein Getriebe umfasst, das vom Motor angetrieben wird, und angeordnet ist, um die Außenhülse (54) in Drehung zu versetzen.

9. Betätigungsvorrichtung nach Anspruch 8, darüber hinaus eine Bremsvorrichtung umfassend, die sich zwischen dem Elektromotor (17) und dem Getriebe befindet.

10. Betätigungsvorrichtung nach einem der vorstehenden Ansprüche, wobei der Antriebsstift (50) formschlüssig mit dem Passstift (52) ist und der Passstift (52) in die Außenhülse (54) eingepresst ist.

## Revendications

1. Dispositif d'actionneur pour activer automatiquement la portière de véhicule (3) d'un véhicule automobile (1), en particulier le hayon (3), qui comprend :
- un entraînement électromoteur comprenant un moteur électrique (17),
- un entraînement à broche (21) comprenant une broche (27) ayant une tige d'entraînement (50) au niveau d'une extrémité,
- un manchon extérieur (54) comprenant un creux et agencé pour être entraîné en rotation par l'entraînement électromoteur ou par l'entraînement à broche,
- un agencement de parties de boîtier tubulaire (15, 25) qui peut être étendu et rétracté de manière télescopique suite à la rotation de la broche,
dans lequel la tige d'entraînement est ajustée par pression dans le creux du manchon extérieur par l'intermédiaire d'une goupille de positionnement (52) de sorte que la broche soit tournée suite à la rotation du manchon extérieur,
dans lequel un élément choisi parmi la tige d'entraînement (50) et le creux du manchon extérieur (54) comprend une pluralité d'excroissances (51, 55) dans une pluralité de directions sensiblement perpendiculaires à l'axe commun de rotation de la broche (27), de la goupille de positionnement (52) et du manchon extérieur (54) et dans lequel la pluralité d'excroissances (51, 55) interagit avec la goupille de positionnement (52) de manière à transférer le mouvement de rotation du manchon extérieur (54) à la broche (27) par l'intermédiaire de la goupille de positionnement (52), et
dans lequel la surface extérieure de la goupille de positionnement (52) et la surface intérieure du manchon extérieur (54), respectivement la surface intérieure de la goupille de positionnement (52) et la surface extérieure de la tige d'entraînement (50), sont configurées de manière à définir un couple seuil à appliquer entre le manchon extérieur et la broche, au-delà du couple seuil la surface extérieure de la goupille de positionnement glisse sur la surface intérieure du manchon extérieur, respectivement, la surface intérieure de la goupille de positionnement glisse sur la surface extérieure de la tige d'entraînement.

2. Dispositif d'actionneur selon la revendication 1, dans lequel la tige d'entraînement (50) comprend la pluralité d'excroissances (51).

3. Dispositif d'actionneur selon la revendication 2, dans lequel la pluralité d'excroissances (51) s'étend en continu le long d'une direction sensiblement parallèle à l'axe de rotation de la tige d'entraînement (50) à partir de l'extrémité de la tige d'entraînement (50) ajustée dans le manchon extérieur (54).

4. Dispositif d'actionneur selon la revendication 1, dans lequel le creux du manchon extérieur (54) comprend la pluralité d'excroissances (55).

5. Dispositif d'actionneur selon la revendication 4, dans lequel la pluralité d'excroissances (55) s'étend en continu le long d'une direction sensiblement parallèle à l'axe de rotation du manchon extérieur (54) à partir de l'extrémité du manchon extérieur (54), dans lequel la tige d'entraînement (50) est ajustée dans le manchon extérieur (54).

6. Dispositif d'actionneur selon l'une des revendications 1 à 5, dans lequel la goupille de positionnement (52) comprend au moins une fente axiale agencée pour recevoir la pluralité d'excroissances.

7. Dispositif d'actionneur selon l'une des revendications précédentes, dans lequel la goupille de positionnement (52) est réalisée en un matériau élastique, tel qu'un acier à ressort.

8. Dispositif d'actionneur selon l'une des revendications précédentes, dans lequel l'entraînement électromoteur comprend en outre une boîte de vitesses entraînée par le moteur et agencée pour entraîner en rotation le manchon extérieur (54).

9. Dispositif d'actionneur selon la revendication 8, comprenant en outre un dispositif de freinage situé entre le moteur électrique (17) et la boîte de vitesses.

10. Dispositif d'actionneur selon l'une des revendications précédentes, dans lequel la tige d'entraînement (50) est ajustée par complémentarité de forme à la goupille de positionnement (52) et la goupille de positionnement (52) est ajustée par pression dans le manchon extérieur (54).
